# EUROPEAN PATENT APPLICATION

(11) **EP 4 580 149 A1**
(43) Date of publication of application: **02.07.2025**
(21) Application number: 23864332.4
(22) Date of filing: 23.04.2023
(51) Int. Cl.: H04L 45/00

(54) **NETWORK SLICE CREATION METHOD AND APPARATUS, AND NETWORK-SIDE DEVICE**

(30) Priority: 15.09.2022 CN 202211123838
(71) Applicant: ZTE CORPORATION, Shenzhen, Guangdong 518057 (CN)
(72) Inventor: PENG, Shaofu, Shenzhen, Guangdong 518057 (CN); ZHANG, Baoya, Shenzhen, Guangdong 518057 (CN)
(74) Representative: Ziebig Hengelhaupt Intellectual Property Attorneys Patentanwaltskanzlei PartGmbB
(86) International application number: PCT/CN2023/090136
(87) International publication number: WO 2024/055591

(57) **Abstract**

The present application belongs to the field of communications. Disclosed are a network slice creation method and apparatus, and a network-side device. The network slice creation method in the embodiments of the present application comprises: acquiring configuration file information of a network slice; creating the network slice according to the configuration file information; and sending the configuration file information to at least one second node in a predetermined network, wherein the configuration file information is used for making the second node create the network slice according to the configuration file information.

## Description

### CROSS REFERENCE TO RELATED APPLICATION

This application claims priority to Chinese Patent Application No. 202211123838.0 filed on September 15, 2022, entitled "Network slice creation method and apparatus, and network-side device", the entirety of which is incorporated herein by reference.

### TECHNICAL FIELD

Embodiments of the present application relate to the field of communications, and in particular to a network slice creation method and apparatus, and a network-side device.

### BACKGROUND

End-to-end network slicing of the 5th generation mobile communication technology (5G) refers to flexible allocation of network resources, on-demand networking, and virtualization of a plurality of logical subnets with different characteristics and isolation based on the 5G network. Each end-to-end network slice is composed of wireless network, transmission network and core network sub-slices. The core requirement of 5G network slice for the bearer network is that different network slices need to have their own dedicated bearer sub-networks, different dedicated sub-networks can be strictly isolated in terms of resource, or be softly isolated which achieves the effect similar to that of hard isolation.

Currently, there are a variety of 5G bearer network slicing technologies proposed in the industry. For example, some use the interior gateway protocol (IGP) multi-topology technology, which divides the same physical network topology into a plurality of logical sub-topologies; others use the IGP flexible algorithm, which runs a plurality of IGP algorithms in the same topology, calculates a plurality of forwarding planes, iterates different services to different forwarding planes, and uses the network resource partitioning (NRP) technology to create a logical network identified by NRP-ID and its associated resources in an end-to-end network. According to these methods, it is required to manually configure dedicated resources for each node of the network slice to be created, which is low in efficiency and requires a large workload for deployment of the network slices.

### SUMMARY

Embodiments of the present application provide a network slice creation method and apparatus, and a network-side device.

In a first aspect, provides is a network slice creation method, the method includes: acquiring configuration file information of a network slice; creating the network slice according to the configuration file information; sending the configuration file information to at least one second node in a predetermined network, wherein the configuration file information is used to enable the second node to create the network slice according to the configuration file information.

In a second aspect, provided is a network slice creation apparatus, the apparatus includes: an acquiring module for acquiring configuration file information of a network slice; a creating module for creating the network slice according to the configuration file information; and a sending module for sending the configuration file information to at least one second node in a predetermined network, wherein the configuration file information is used to enable the second node to create the network slice according to the configuration file information.

In a third aspect, provided is a network-side device, the network-side device includes a processor and a memory, the memory stores a program or instruction that can run on the processor, and the program or instruction, when executed by the processor, implements the steps of the method of the first aspect.

In a fourth aspect, provided is a readable storage medium, the readable storage medium stores a processor and a memory thereon, and the program or instruction, when executed by the processor, implements the steps of the method of the first aspect.

In a fifth aspect, provided is a chip, the chip includes a processor and a communication interface, the communication interface is coupled to the processor, and the processor is used to execute a program or instruction so as to implement the steps of the method of the first aspect.

In a sixth aspect, provided is a computer program/program product, the computer program product/program product is stored in a storage medium, and the computer program product/program product is executed by the processor so as to implement the steps of the network slice creation method of the first aspect.

The embodiments of the present application include: acquiring configuration file information of a network slice; creating the network slice according to the configuration file information; sending the configuration file information to at least one second node in a predetermined network, wherein the configuration file information is used to enable the second node to create the network slice according to the configuration file information.

### BRIEF DESCRIPTION OF DRAWINGS

FIG. 1 is a schematic diagram that illustrates a wireless communication system that is applicable to an embodiment of the present application.
FIG. 2 is a schematic flow chart that illustrates a network slice creation method provided by an embodiment of the present application.
FIGS. 3 to 10 are schematic diagrams that illustrate encapsulation formats of optional information fields of extended protocols provided by embodiments of the present application.
FIG. 11 is a schematic diagram that illustrates a network slice across different domains provided by an embodiment of the present application.
FIG. 12 is a schematic structural diagram that illustrates a network slice creation apparatus provided by an embodiment of the present application.
FIG. 13 is a schematic structural diagram that illustrates a network-side device provided by an embodiment of the present application.

### DETAILED DESCRIPTION

Technical solutions in embodiments of the application will be described clearly below with reference to the accompanying drawings in embodiments of the application. Obviously, the embodiments described are part of the embodiments of the application rather than all of the embodiments. All other embodiments acquired by a person skilled in the art based on embodiments in the application fall within the scope of the application.

The terms "first", "second", and the like in the description and in the claims of the application are used to distinguish between similar objects rather than describing a specific order or a sequence. It is to be understood that terms used in such a way may be interchanged where appropriate, whereby embodiments of the application can be implemented in an order other than those illustrated or described herein, the objects distinguished by "first" and "second" are generally of one type, and the number of objects is not limited, for example, a first object may refer to one or more first objects. In addition, "and/or" in the description and claims indicates at least one of the objects connected therewith, and the character "/" generally indicates that the objects associated therewith are in an "or" relationship.

It should be note that the technology described in embodiments of the present application is not limited to Long Term Evolution (LTE)/LTE-Advanced (LTE-A) system, but can also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA), and other systems. The terms "system" and "network" in embodiments of the present application are often used interchangeably, and the described technologies can be used for both the systems and radio technologies that are mentioned above and other systems and radio technologies. The following description describes a New Radio (NR) system for illustrative purposes, and NR terms are used in most of the following description, but these technologies can also be applied to applications other than NR system applications, such as a 6th Generation (6G) communication system.

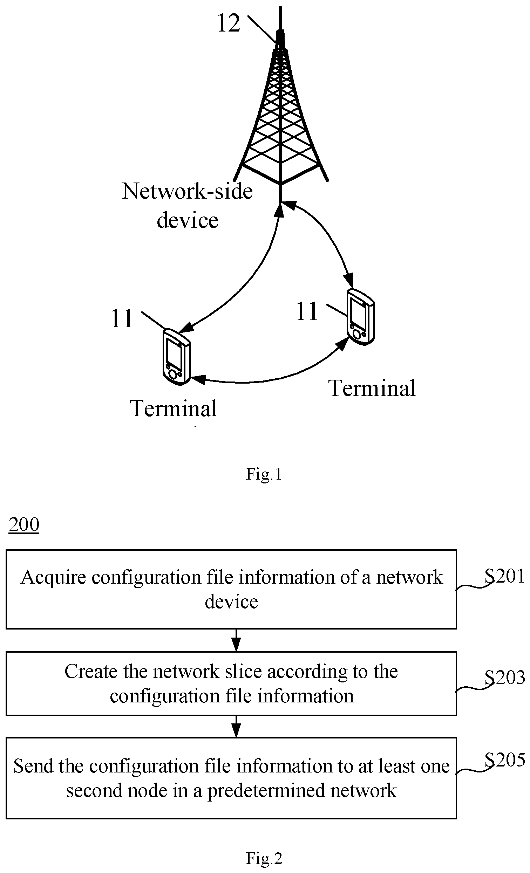

FIG. 1 is a block diagram that illustrates a wireless communication system that is applicable to an embodiment of the present application. The wireless communication system includes a terminal 11 and a network-side device 12. Here, the terminal 11 can be a mobile phone, a tablet personal computer, a laptop computer (also known as a notebook computer), a personal digital assistant (PDA), a handheld computer, a netbook, an ultra-mobile personal computer (UMPC), a mobile Internet device (MID), an augmented reality (AR)/virtual reality (VR) equipment, a robot, a wearable device, a vehicle-mounted equipment (VUE), a pedestrian terminal (PUE), a smart home (a home equipment with wireless communication function, such as a refrigerator, a television, a washing machine or furniture, etc.), a game console, a personal computer (PC), an automatic teller machine or a self-service machine and other terminal-side devices, and the wearable device includes: a smart watch, a smart bracelet, a smart headset, a pair of smart glasses, smart jewelry (smart bangle, smart bracelet, smart ring, smart necklace, smart ankle bangle, smart anklet, etc.), a smart wristband, smart clothing, etc. It should be noted that the specific type of the terminal 11 is not limited in embodiments of the present application. The network-side device 12 can include an access network device or a core network device, the access network device 12 can also be referred to as a radio access network device, a radio access network (RAN), a radio access network function, or a radio access network unit. The access network device 12 can include a base station, a WLAN (Wireless Local Area Network) access point, or a WiFi node, etc. The base station can be referred to as a node B, an evolved node B (eNB), an access point, a base transceiver station (BTS), a radio base station, a radio transceiver, a basic service set (BSS), an extended service set (ESS), a home node B, a home evolved node B, a transmitting receiving point (TRP), or other appropriate terms in the art, the base station is not limited to a specific technical term so long as the same technical effect is achieved. It should be noted that in embodiments of the present application, taking only a base station in an NR system as an example for the purpose of illustration, and the specific type of the base station is not limited.

The network slice creation method provided in embodiments of the application will be described in detail by various embodiments and application scenarios thereof with reference to the accompanying drawings.

Referring to FIG. 2, FIG. 2 is a schematic flow chart that illustrates a network slice creation method provided by an embodiment of the present application, the method can be performed by a network-side device, the network slice creation method 200 includes steps S201, S203 and S205.

At S201, configuration file information of a network slice is acquired.

In some cases, the configuration file information is configuration file information, which is generated at one or more nodes of the physical network, corresponding to the network slice to be created. In embodiments of the present application, the physical network is composed of a first node and a second node. The configuration file information of the network slice is firstly generated at the first node, and then the first node notifies the configuration file information to the second node in the network slice to be created.

The configuration file information includes but is not limited to the following types.
(1) Scheme type: the scheme type indicates the technical scheme for creating a network slice, such as NRP technical scheme, IGP multi-topology technical scheme type (IGP MT), IGP flexible algorithm scheme type (IGP flex-algo), or other schemes.
(2) Slice identifier: which is the slice identifier when a corresponding scheme type is used to create a network slice, for example, the slice identifier is NRP-ID when the NRP scheme is used, the network slice identifier is algorithm when the IGP flex-algo scheme is used, and the network slice identifier is MT-ID when the IGP MT scheme is used.
(3) Profile priority: when a plurality of first nodes in the physical network notify configuration file information related to a network slice, the configuration file information of the first node with a higher priority is validated. That is, when a plurality of nodes in the network notify configuration file information of a specific network slice, the configuration file information of the node with a higher priority is validated.
(4) Slice topology: the slice topology can be a customized topology, such as defining, for the network slice, inclusion or exclusion of a link of in a specific color , inclusion or exclusion of a node of at a specific IP address or inclusion or exclusion of a specific domain (such as AS number or IGP area); or the slice topology can reference a topology created by other scheme types, such as a topology created by IGP MT or IGP flex-algo, or even a topology defined by other configuration file information; or the slice topology can be a customized topology plus reference topology.

Resource allocated for a network slice: which is used to reserve resource for the network slice, wherein the reserved resource can be reserved bandwidth, buffer, or time slot.

At S203: the network slice is created according to the configuration file information.

In some cases, the first node in the network creates the network slice according to the configuration file information, generated by the first node locally, of the network slice. That is, the first node in the network can determine whether the first node is related to the slice, and resource corresponding to the network slice is only allocated on the forwarding plane of the node related to the slice.

At S205: the configuration file information is sent to at least one second node in the predetermined network.

The configuration file information is used to enable the second node to create the network slice according to the configuration file information.

In some cases, the predetermined network may be a domain network of the same domain, or a domain network composed of different domains, wherein the predetermined network may be an IGP network determined according to the internal gateway protocol IGP, or a BGP network determined according to the border gateway protocol (BGP), or an IGP network determined according to the internal gateway protocol IGP and a BGP network determined by the border gateway protocol BGP. The configuration file information that is sent to at least one second node in the predetermined network can be sent within the domain or across domains, in some cases, a first node in the IGP network sends configuration file information to a second node in the IGP network, a first node in the BGP network sends configuration file information to a second node in the BGP network, a first node in the IGP network sends configuration file information to a second node in the BGP network, or a first node in the BGP network sends configuration file information to a second node in the IGP network; and the second node creates the network slice after receiving the configuration file information.

Furthermore, in the case where there are a plurality of first nodes, the configuration file information of the first node with the highest priority indicated by the profile priority can be selected to be validated, and on such basis, links joining the network slice are identified, and corresponding resources of the links are allocated to the network slice on the forwarding plane, resources including but not limited to exclusive queues and available bandwidth, exclusive time slot resources, etc. thereof. It is worth noting that each node in the network can determine whether the node itself is related to the network slice, and resource corresponding to the network slice is only allocated on the forwarding plane of the node related to the slice.

By means of the technical solution disclosed by embodiments of the present application, configuration file information of a network slice is acquired; the network slice is created according to the configuration file information; and the configuration file information is sent to at least one second node in the predetermined network, wherein the configuration file information is used to enable the second node to create the network slice according to the configuration file information. Upon the configuration file information is generated, the node in the network can automatically create a network slice according to the configuration file information, and only part of, rather than all of, the nodes in the network need to generate the configuration file information, part of the nodes send the configuration file information to the second node, then the second node configures dedicated resource for the network slice to be created according to the received configuration file information, which can improve the efficiency in creating the network slice and reduce the workload in deploying the network slice.

In one possible implementation, a predetermined network includes a first internal gateway protocol (IGP) network determined according to IGP, and that the configuration file information is sent to at least one second node in the predetermined network includes: the configuration file information is sent to at least one second node in the first IGP network.

In some cases, when a first node sends the configuration file information to the second node, the first node may send the configuration file information to a second node in the same domain, such as the first node sends the configuration file information to at least one second node in the first IGP network.

The internal gateway protocol (IGP) may be an intermediate system to intermediate system protocol (ISIS). In embodiments of the present application, in order to enable the internal gateway protocol IGP to support sending of configuration file information, the internal gateway protocol (IGP) is extended, for example, an optional information field (Slice Profile TLV) is added to the ISIS protocol, the optional information field (Slice Profile TLV) is used to represent the scheme type, slice topology, allocated resource and profile priority in the configuration file information.

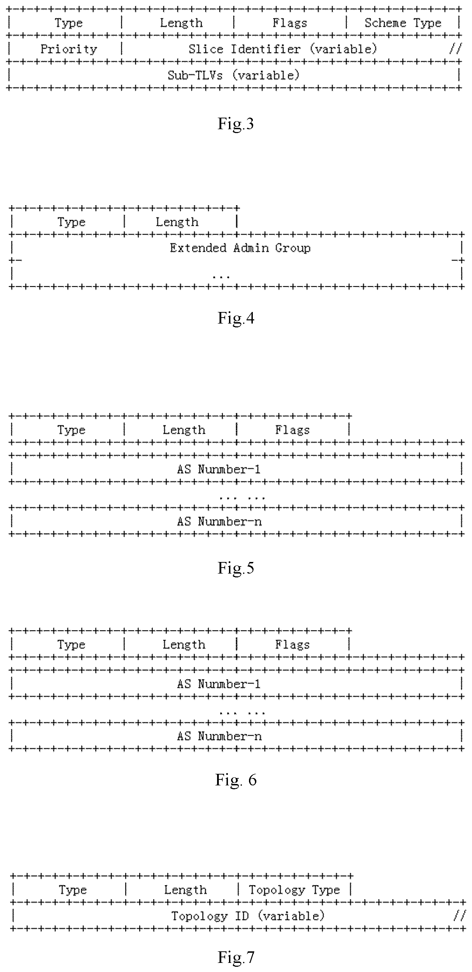

Exemplarily, the encapsulation format of the optional information field (Slice Profile TLV) may be composed as shown in FIG. 3, wherein each field is explained as follows.
(1) Type: occupying 1 byte, the value of Type is to be allocated by the Internet Assigned Numbers Authority (IANA), and Type is used to indicate that this field (TLV) is an optional information field (Slice Profile TLV).
(2) Length: occupying 1 byte, Length indicates the length of the optional information field (Slice Profile TLV), but does not include the length of the Type and Length fields.
(3) Flags: the following two flags are currently defined.

S-flag: 1 byte, when set as 1, it means that the optional information field (Slice Profile TLV) needs to be flooded in the entire routing domain; when set as 0, it means that the optional information field (Slice Profile TLV) cannot be leaked between levels. When the optional information field (Slice Profile TLV) is leaked between levels, the S-flag is kept unchanged.

D-flag: when the optional information field (Slice Profile TLV) is leaked from level 2 to level 1, the D-flag needs to be set to 1, otherwise it needs to be set to 0. For the optional information field (Slice Profile TLV) with the D-flag set as 1, it cannot be leaked from level 1 to level 2. The purpose of this flag is to avoid notification of the optional information field (Slice Profile TLV) from forming a loop.

(4) Scheme Type: occupying 1 byte, Scheme Type indicates the type of scheme for creating the network slice. Currently, the following values are defined.

The first value (such as 0): IGP MT.

The second value (such as 1): IGP flex-algo.

The third value (such as 2): NRP.

In other words, the optional information field is specific to the scheme type in the configuration file information, and the optional information field uses different values to indicates different scheme types, including: a first value, indicating the IGP multi-topology technology scheme type; a second value, indicating the IGP flexible algorithm scheme type; and a third value, indicating the NRP scheme type.

(5) Priority: occupying 1 byte, Priority indicates the priority of the node in the notified optional information field (Slice Profile TLV), the value thereof ranges from 0 to 255, where the larger the value is, the higher the priority is.

(6) Slice Identifier: a -length-variable slice identifier that depends on the Scheme Type. If the Scheme Type is IGP MT, the Slice Identifier occupies 2 bytes and represents MT-ID; if the Scheme Type is IGP flex-algo, the Slice Identifier occupies 1 byte and represents algorithm; and if the Scheme Type is NRP, the Slice Identifier occupies 4 bytes and represents NRP-ID.

(7) Sub-TLVs: the optional information field (Slice Profile TLV) may further include the following Sub-TLVs.

In some cases, with respect to the slice topology in the profile information, the optional information field specifies inclusion or exclusion of a link in a specific color, the encapsulation format of relevant Sub-TLVs is shown in FIG. 4, the Sub-TLVs may appear only once in the optional information field (Slice Profile TLV):

The fields in FIG. 4 are explained as follows.
(1) Type: occupying 1 byte, the value of Type is to be allocated by IANA, and is used to indicate whether this TLV includes or excludes the link in a specific color (Exclude Admin Group Sub-TLV).
(2) Length: occupying 1 byte, indicating the length of this TLV, excluding the length of the Type and Length fields.
(3) Extended Administrative Group: the length of this field is variable, and this field contains one or more pieces of color information, please refer to RFC7308.

In one possible implementation, with respect to the slice topology in the configuration file information, the optional information field specifies to contain or exclude a link in a specific color configuration file information, and the rules of related Sub-TLVs include one of the following.

Exclude Admin Group Sub-TLV: For any one link in the physical network, if the color information of the link contains any color contained in the optional information field, the link is cut from the network slice.

Include-Any Admin Group Sub-TLV: For any one link in the physical network, if the color information of the link does not contain any color contained in the optional information field, the link is cut from the network slice.

Include-All Admin Group Sub-TLV: For any one link in the physical network, if the color information of the link does not contain all color contained in the optional information field, the link is cut from the network slice.

Furthermore, with respect to the slice topology in the configuration file information, the optional information field specifies to contain or exclude a node at a specific IP address, the encapsulation format of relevant Sub-TLVs is shown in FIG. 5, and the Sub-TLV can appear only once in the optional information field (Slice Profile TLV):

The fields of the Sub-TLVs in FIG. 5 are explained as follows.
(1) Type: occupying 1 byte, the value of Type is to be allocated by IANA, and is used to indicate whether this optional information field (Slice Profile TLV) includes or excludes a node at a specific IP address (Exclude Prefix List Sub-TLV).
(2) Length: occupying 1 byte, indicating the length of this optional information field (Slice Profile TLV), but does not include the length of the Type and Length fields.
(3) Flags: occupying 1 byte, the following flags are currently defined.

F-flag: When F-flag is 0, it indicates that the subsequent Prefix field contains a prefix of Internet Protocol Version 4 (IPv4); when F-flag is 1, it indicates that the subsequent Prefix field contains a prefix of Internet Protocol Version 6 (IPv6).

(4) Prefix Length: occupying 1 byte, it indicates the number of bytes of the following prefix, which refers to the number of bytes in the high-order part of the prefix.

(5) Prefix: indicating the high-order part of the prefix. The length of this field is variable and depends on the Prefix Length. When the Prefix Length ranges from 1 to 8, the Prefix occupies 1 byte; when the Prefix Length ranges from 9 to 16, the Prefix occupies 2 bytes; and so on, when the Prefix Length value ranges from 112 to 128, the Prefix occupies 16 bytes.

The Sub-TLVs contains a Prefix List consisting of a plurality of prefixes.

In one possible implementation, the optional information field specifies inclusion or exclusion of a node at specific IP address for a slice topology in the configuration file information, and the rules of Sub-TLVs include one of the following:

Exclude Prefix List Sub-TLV: For any node in the physical network, if the IP address of the node can be covered by a high-order part of any prefix contained in the optional information field, the node is cut from the network slice.

Include Prefix List Sub-TLV: For any node in the physical network, if the IP address of the node cannot be covered by a high-order part of all prefixes contained in the optional information field, the node is cut from the network slice.

Furthermore, the optional information field specifies inclusion or exclusion of a specific domain for the slice topology in the profile information, the encapsulation format of relevant Sub-TLVs is shown in FIG. 6, the Sub-TLVs can only appear once in the optional information field (Slice Profile TLV):

The fields of the Sub-TLV in FIG. 6 are explained as follows:
(1) Type: 1 byte, its value is to be allocated by IANA, and used to indicate whether this optional information field (Slice Profile TLV) includes or excludes a specific domain (Exclude AS List Sub-TLV).
(2) Length: 1 byte, indicating the length of this optional information field (Slice Profile TLV), but not including the length of the Type and Length fields.
(3) Flags: 1 byte, no flags are currently defined.
(4) AS Number: 4 bytes, indicating an autonomous system (AS) number.

The Sub-TLV contains an AS List consisting of a plurality of AS.

In one possible implementation, the optional information field specifies inclusion or exclusion of a specific domain for the slice topology in the configuration file information, and the rules of Sub-TLVs include one of the following:

Exclude AS List Sub-TLV: For any node in the physical network, if an autonomous system AS where any node is located can be covered by any autonomous system contained in the optional information field, the node is cut from the network slice.

Include AS List Sub-TLV: For any node in the physical network, if an autonomous system AS where any node is located cannot be covered by all autonomous systems contained in the optional information field, the node is cut from the network slice.

Furthermore, with respect to the allocated resource in the configuration file, the optional information field uses different identifiers to indicate resource information in the allocated resource, the encapsulation format of relevant Sub-TLVs (Reference Topology Sub-TLV) is shown in FIG. 7, the Sub-TLVs can only appear once in the optional information field (Slice Profile TLV):

The fields of the Sub-TLVs in FIG. 7 are explained as follows:
(1) Type: 1 byte, its value is to be allocated by IANA, and is used to indicate that this TLV is Reference Topology Sub-TLV.
(2) Length: 1 byte, indicating the length of this TLV, but not including the length of the Type and Length fields.
(3) Topology Type: 1 byte, indicating the type of reference topology. The currently defined values are as follows:
   The first value (such as 0): IGP MT.
   The second value (such as 1): IGP flex-algo.
   The third value (such as 2): NRP.
(4) Topology ID: the length of this field is variable and depends on Topology Type. If the Topology Type is IGP MT, then the Topology ID occupies 2 bytes and represents MT-ID; if the Topology Type is IGP flex-algo, then the Topology ID occupies 1 byte and represents algorithm; if the Topology Type is NRP, then the Topology ID occupies 4 bytes and represents NRP-ID.

In one possible implementation, when the optional information field is specific to a reference topology in the configuration file information, different values are used to indicate different types of reference topologies, including:
The first value indicates an IGP multi-topology technology scheme type.

The second value indicates an IGP flexible algorithm scheme type.

The third value indicates a NRP scheme type. Where, the first value, the second value and the third value are different, and may be any value according to actual conditions.

The predetermined network includes a second border gateway protocol (BGP) network determined according to BGP, and that the configuration file information is sent to at least one second node in the predetermined network includes: the configuration file information is sent to at least one third node in the second BGP network.

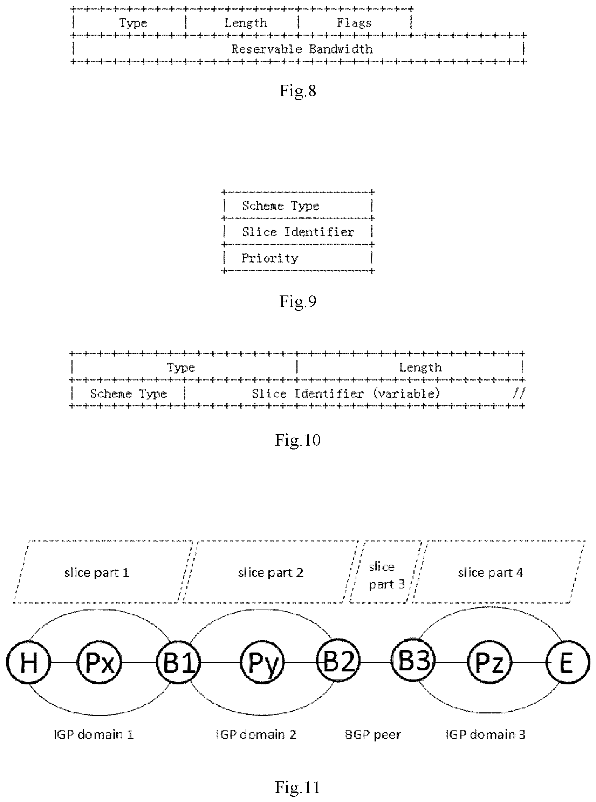

Furthermore, when the optional information field is specific to allocated resource in the configuration file information, different identifiers are used to indicate resource information in the allocated resource, the encapsulation format of relevant Sub-TLV (Reservable Bandwidth Sub-TLV) is shown in FIG. 8, the Sub-TLV can only appear once in the optional information field (Slice Profile TLV):

The fields of the Sub-TLV in FIG. 8 are explained as follows:
(1) Type: 1 byte, its value is to be allocated by IANA, and is used to indicate that this TLV is allocated resource (Reservable Bandwidth Sub-TLV).
(2) Length: 1 byte, which indicates the length of this optional information field (Slice Profile TLV), but does not include the length of the Type and Length fields.
(3) Flag: 1 byte, the following flags are currently defined.

P-flag: When P-flag is 0, it indicates that the subsequent Reservable Bandwidth field contains absolute bandwidth values; or when P-flag is 1, it indicates that the subsequent Reservable Bandwidth field contains a percentage of the total link bandwidth.

(4) Reservable Bandwidth: The length of this field is variable, if P-flag is 0, it occupies 4 bytes and contains an absolute value of a reserved bandwidth in bytes/s; if P-flag is 1, it occupies 1 byte and contains a percentage of a reserved bandwidth to the total link bandwidth, the value ranges from 1 to 100, indicating 1% to 100%.

It is worth noting that Sub-TLV related to other resource types, such as buffer and time slot, can be similarly defined, and the embodiments of the present application will not be repeated here. In addition, the above-mentioned extension of the ISIS protocol is just one specific way of listing, and embodiments of the present application are not limited to such protocol extensions, the optional information fields that can uniformly represent the configuration file information can be extended, for example, the link-state-based Interior Gateway Protocol (OSPFv2) or the Open Shortest Path First (OSPF) routing protocol (OSPFv3) running on IPV6 can be extended to notify (send) the configuration file information between different nodes, and embodiments of the present application will not be repeated here.

In one possible implementation, the predetermined network includes a second border gateway protocol (BGP) network determined according to BGP, and that the configuration file information is sent to at least one second node in the predetermined network includes: the configuration file information is sent to at least one third node in the second BGP network.

In some cases, when a first node sends configuration file information to a second node, a first node may send configuration file information to a second node in the same domain, such as a first node sends configuration file information to at least one second node in the second IGP network.

The Border Gateway Protocol (BGP) may be Multiprotocol Reachable Network Layer Reachability Information (M_REACH_NLRI) protocol and Multiprotocol Unreachable Network Layer Reachability Information (MP_UNREACH_NLRI) protocol defined in RFC4760. In embodiments of the present application, in order to enable the Border Gateway Protocol (BGP) to support sending configuration file information, the Border Gateway Protocol (BGP) is extended, for example, based on the MP_REACH_NLRI protocol and the MP_UNREACH_NLRI protocol defined in RFC4760, a new network side reachability information (NLRI) type is defined, and the address family identifier (AFI) and SAFI used to notify the address type in NLRI can be allocated by IANA. A newly defined NLRI type is recorded as the optional information field (Slice Profile NLRI) of the Border Gateway Protocol (BGP), the optional information field (Slice Profile NLRI) is used to characterize the scheme type, slice topology, allocated resource and profile priority in the configuration file information.

Exemplarily, the encapsulation format of an optional information field (Slice Profile NLRI) of the Border Gateway Protocol (BGP) is shown in FIG. 9, wherein each field is explained as follows:
(1) Scheme Type: 1 byte, it indicates the type of scheme for creating a slice. Currently, the following values are defined:
   The first value (such as 0): IGP MT.
   The second value (such as 1): IGP flex-algo.
   The third value (such as 2): NRP.
(2) Slice Identifier: a length-variable slice identifier that depends on the Scheme Type. If the Scheme Type is IGP MT, the Slice Identifier occupies 2 bytes and represents MT-ID; if the Scheme Type is IGP flex-algo, the Slice Identifier occupies 1 byte and represents algorithm; if the Scheme Type is NRP, the Slice Identifier occupies 4 bytes and represents NRP-ID.
(3) Priority: 1 byte, it indicates the priority of configuration file information (Slice Profile) of the notification, where the value ranges from 0 to 255, the larger the value is, the higher the priority is.

In addition, RFC4271 defines Path Attributes of the Border Gateway Protocol (BGP), which are carried with a BGP route notification and indicate various attributes of the route. In the present application, a new Path Attribute is added in the optional information field (Slice Profile NLRI), denoted as Slice Profile attribute, and its Attribute Type Code is to be assigned by IANA. The Slice Profile attribute is only notified collectively with the above optional information field (Slice Profile NLRI), which is an optional non-transmitting attribute.

The attribute value field of Slice Profile attribute further includes Sub-TLVs, the Sub-TLVs in the Border Gateway Protocol BGP and the Sub-TLVs in the above-mentioned Internal Gateway Protocol IGP have the same or similar implementations, which can refer to each other. Embodiments of the present application will not be repeated here.

In addition, the Sub-TLVs of Border Gateway Protocol (BGP) further include Local Slice Mapping Sub-TLV used to characterize the scheme type for creating a network slice, the encapsulation format of the Local Slice Mapping Sub-TLV is shown in FIG. 10, with fields thereof defined as follows.
(1) Type: 2 bytes, its value is to be allocated by IANA, and is used to indicate that this optional information field is Local Slice Mapping Sub-TLV.
(2) Length: 2 bytes, indicating the length of this TLV, but not including the length of the Type and Length fields.
(3) Scheme Type: 1 byte, indicating the type of scheme for creating a network slice. Currently, the following values are defined.

The first value (such as 0): IGP MT.

The second value (such as 1): IGP flex-algo.

The third value (such as 2): NRP.

(4) Slice Identifier: A length-variable slice identifier that depends on the Scheme Type. If the Scheme Type is IGP MT, the Slice Identifier occupies 2 bytes and represents MT-ID; if the Scheme Type is IGP flex-algo, the Slice Identifier occupies 1 byte and represents algorithm; if the Scheme Type is NRP, the Slice Identifier occupies 4 bytes and represents NRP-ID.

Further, the predetermined network includes a first IGP network determined according to IGP and a second BGP network determined according to BGP, and that the configuration file information is sent to at least one second node in a predetermined network includes at least one of the following.

The configuration file information is sent to a fourth node in the second BGP network by a border node in the first IGP network.

Or, the configuration file information is sent to a fifth node in the first IGP network by a border node in the second BGP network.

Or, the configuration file information is sent to a sixth node in the second IGP network by a border node in the first IGP network, wherein the first IGP network is different from the second IGP network.

In some cases, in order to notify the resource corresponding to the network slice in the entire network, a domain border node may distribute the configuration file information learned from the IGP network to the BGP network and notify the same to neighbors in the BGP network, or a domain border node may distribute the configuration file information learned from BGP to nodes in the IGP network, thereby sending the configuration file information across the domains, so that nodes in different domains can learn the configuration file information generated by some nodes, and the integrity in network slice creating is improved.

When one network slice crosses a plurality of domains belonging to different managers, it is possible that different slicing scheme types and slice identifiers are used for the network slice in different domains, for example, for a cross-domain network slice with the same logic, scheme type 1 and Slice Identifier 1 are used to identify the network slice in IGP area 1 (domain 1), whereas scheme type 2 and Slice Identifier 2 are used to identify the network slice in BGP area 2 (domain 2). In this case, the network slice is created by using different creation modes in the first IGP network and the second BGP network, and that the configuration file information is sent to the fourth node in the second BGP network by the border node in the first IGP network includes: when the configuration file information is sent to the fourth node in the second BGP network by the border node in the first IGP network, local slice mapping information is carried; where, the local slice mapping information indicates that the creation mode used in the second BGP network and the slice identifier corresponding to the creation mode.

Alternatively, the network slice is created using different creation modes in the first IGP network and the second BGP network, and that the configuration file information is sent to the fifth node in the first IGP network by the border node in the second BGP network includes: when the configuration file information is sent to the fifth node in the first IGP network by the border node in the second BGP network, the local slice mapping information is carried; where the local slice mapping information indicates that the creation mode used in the first IGP network and the slice identifier corresponding to the creation mode.

In some cases, local slice mapping information is information after local slice mapping, and local slice mapping (LSM) represents a network slice after local mapping. For example, when node 1 in domain 1 notifies the configuration file information (Slice Profile) to node 2 in domain 2, LSM information is carried, where the LSM information provides local slice information (including Scheme Type 2 and Slice Identifier 2) used in domain 2, in other words, domain 2 will use Scheme Type 2 and Slice Identifier 2 to identify the cross-domain network slice. When the domain border node redistributes the configuration file information (Slice Profile) learned from BGP to IGP and floods the same to each node in the IGP domain, the Scheme Type and Slice Identifier provided by LSM in the configuration file information (Slice Profile) learned from BGP should be used as the Scheme Type and Slice Identifier of the configuration file information (Slice Profile) when flooding to the IGP domain.

It should be noted that in the case of a cross-domain network slice (such as across IGP domain or across BGP AS), a domain border node may forcibly close the notification of configuration file information (Slice Profile) (which can be part of the Slice Profile or all of the Slice Profile) across domains, so that the configuration file information (Slice Profile) is flooded or notified only within the domain, in this case, the corresponding configuration file information (Slice Profile) needs to be generated on at least one node in each domain involved in the cross-domain network slice, and the node that generates the configuration file information in the domain sends the configuration file information to other nodes in the domain The configuration file information can be generated by explicit configuration on these nodes, or the controller explicitly sends path information to these nodes to trigger generation of the configuration file information.

In one possible implementation, prior to that the configuration file information of the network slice is acquired, the method further includes: the configuration file information is generated.

In some cases, the configuration file information may be generated at one or more nodes, and the generation method of the configuration file information at one or more nodes may include one of the following: static configuration according to network slicing planning of a first target object; dynamic generation according to a slice path acquired by dynamic calculation; and dynamic generation according to a slice path received from a second target object.

Exemplarily, the scheme for disclosing cross-domain notification of configuration file information in the embodiments of the present application is further explained below in conjunction with FIG. 11, as shown in FIG. 11, a network slice crossing three IGP domains is created, the end-to-end network slice is composed of slice part 1, slice part 2, slice part 3, and slice part 4, the nodes and links contained in each slice part may be a full set or subset of the nodes and links, or inter-domain links, contained in the IGP domain to which it belongs. In some cases, it is necessary to distribute configuration information of the slice to all nodes contained in the network slice. However, by means of the technical solution disclosed in the present application, it is only necessary to configure or dynamically generate configuration file information (Slice Profile) at a single node (such as node H) in the network slice.

The, the node H will flood the IGP domain 1 by means of the internal gateway protocol IGP, that is, the node H will send the configuration file information to the nodes in the IGP domain 1 by the internal gateway protocol, then each node related to the network slice in the IGP domain 1, such as the Px nod,e will allocate corresponding resource instances for the network slice on the forwarding plane.

The border node B1 of IGP domain 1 will continue to leak configuration file information (Slice Profile) learned from IGP domain 1 to each node in IGP domain 2, then each node related to the network slice in IGP domain 2 will allocate corresponding resource instance for the network slice on its forwarding plane.

The border node B2 of IGP domain 2 will continue to redistribute configuration file information (Slice Profile) learned from IGP domain 2 to the BGP instance, and notify neighbor node B3 in the BGP domain, then the node B3 will allocate the corresponding resource instance for the network slice on its forwarding plane.

The border node B3 will continue to redistribute configuration file information (Slice Profile) learned from the BGP neighbor to the IGP instance, that is, flooding (sending) configuration file information (Slice Profile) to IGP domain 3, then each node related to the network slice in IGP domain 3 will allocate corresponding resource instance for the network slice on its forwarding plane.

Exemplarily, an embodiment of the present application combines the above-mentioned FIG. 11 with several typical scheme types for creating a network slice as examples to further explain the application of the above-mentioned extended protocol to create a network slice.

Firstly, the IGP flex-algo scheme type is adopted as the scheme type for creating a network slice.

As shown in FIG. 11, the network slice crossing three IGP domains is created, the end-to-end network slice is composed of slice part 1, slice part 2, slice part 3, and slice part 4. Assuming that IGP domain 1 and IGP domain 2 belong to the same manager, and IGP domain 3 belongs to another manager, Slice part 1 and Slice part 2 are both virtual networks created based on Flex-algorithm 128, and slice part 4 is a demand network created based on Flex-algorithm 129.

Since the virtual network created by the IGP flex-algo scheme in the related technology has completed the slice topology creation by the Flexible Algorithm Definition (FAD), only notification by relevant configuration file information (Slice Profile) is needed to supplement the specified resource for the network slice.

For example, the following configuration file information (Slice Profile) is generated at node H:
(1) Scheme type: IGP flex-algo.
(2) Slice identifier: 128.
(3) Profile priority: 255.
(4) Allocated resource for a slice: reservable bandwidth 100 M bits/s.

Node H floods (sends) the above-mentioned configuration file information (Slice Profile) to IGP domain 1 by the interior gateway protocol (IGP), the flooded configuration file information (Slice Profile) contains the following TLVs/Sub-TLVs:
(1) Optional field information: Slice Profile TLV.
(2) Rules for allocated resource: Reservable Bandwidth Sub-TLV.

After receiving the flooded configuration file information (Slice Profile), each node in IGP domain 1 determines whether the node itself is in the Flex-algorithm 128 virtual network, if YES, a dedicated queue for Flex-algorithm 128 is created in the corresponding link resource on its forwarding plane and the bandwidth resource is set to 100 M bits/s.

The border node B1 will continue to leak the configuration file information (Slice Profile) learned from IGP domain 1 to IGP domain 2 by the internal gateway protocol IGP, after receiving the flooded configuration file information (Slice Profile), each node in IGP domain 2 (such as node py and node B2) determines whether it is in the Flex-algorithm 128 virtual network, if YES, a dedicated queue for Flex-algorithm 128 is created in the corresponding link resources on its forwarding plane and the bandwidth resource is set to 100 M bits/s. In particular, the border node B2 of IGP domain 2 can establish a dedicated queue for Flex-algorithm 128 for the inter-domain link link-B2-B3 and set the bandwidth resource to 100 M bits/s, as long as the color information of the inter-domain link can successfully pass the topology filtering rules of Flex-algorithm 128 (i.e., the rules for specifying the inclusion or exclusion of links in specific colors mentioned in the above embodiment).

It is worth noting that IGP domain 2 may also use a Flex-algorithm different from IGP domain 1 to characterize a network slice, at this time, a local policy can be configured at node B1 to generate a new Slice Profile 2 (including the Flex-algorithm of IGP domain 2) and flood the Slice Profile 2 into IGP domain 2, the Slice Profile 1 originally learned from IGP domain 1 is closed and leaked to IGP domain 2, the resource contained in Slice Profile 2 can be copied from Slice Profile 1.

The node B2 will continue to redistribute configuration file information (Slice Profile) learned from IGP domain 2 to the BGP instance, and notify the neighbor node B3 in the BGP domain. At this time, the local policy can be configured on B2 to add LSM information to the notified configuration file information (Slice Profile), so as to adapt to Flex-algorithm 129 of IGP domain 3, that is, the configuration file information (Slice Profile) in the notification message contains the following NRLI/Sub-TLVs.
(1) Multi-protocol network layer reachability information: MP_REACH_NLRI.
(2) Optional information field: Slice Profile NLRI.
(3) Slice Profile attribute in the above-mentioned embodiment.
(4) Rules for allocated resource: Reservable Bandwidth Sub-TLV.

The Local Slice Mapping Sub-TLV in the above embodiment.

After receiving the above BGP notification (BGP peer), the node B3 floods IGP domain 3, where the Scheme Type and Slice Identifier information of the configuration file information (Slice Profile) can be copied from the LSM.

After receiving the flooded message, each node in IGP domain 3 (such as node B3, node Pz, and node E) determines whether it is in the Flex-algorithm 129 virtual network, if YES, a dedicated queue for Flex-algorithm 129 is created in the corresponding link resource on the forwarding plane of the node, and the bandwidth resource is set to 100 M bits/s.

It can be seen from the embodiments that the configuration file information (Slice Profile) needs to be generated at a single node, and the local policy (i.e., the local slice mapping information) needs to be configured at the border node where the slice identifier changes, so as to complete resource allocation of the end-to-end IGP flex-algo network slice. Compared with a method in some cases of configuring network slice resource for nodes in the entire network, the configuration efficiency and the creation efficiency of network slices are improved, and the operation and maintenance overhead is reduced.

It is worth noting that although the topology filtering rules (exclude/include-any/include-all) contained in the existing FAD of IGP flex-algo are used in the embodiments to create the topology, it is obvious that another solution may be used to create the topology according to the topology filtering rules in the configuration file information (Slice Profile) instead of using the FAD of IGP flex-algo.

Besides, the IGP MT scheme type is adopted in creating a network slice.

As shown in FIG. 11, the network slice crossing three IGP domains is created, the end-to-end network slice is composed of slice part 1, slice part 2, slice part 3, and slice part 4. Assuming that IGP domain 1 and IGP domain 2 belong to the same manager, and IGP domain 3 belongs to another manager, slice part 1 and slice part 2 are both virtual networks created based on MT-ID 100, and slice part 4 is a demand network created based on MT-ID 200.

Since the virtual network created by the IGP MT scheme in the related technology has completed topology creation of the network slice by configuring topology attributes in the link, only notification of relevant Slice Profile is needed to supplement specified resource.

For example, the following configuration file information (Slice Profile) is generated on node H.
(1) Scheme type: IGP MT.
(2) Slice identifier: 100.
(3) Profile priority: 255.
(4) Allocated resource for a slice: reservable bandwidth 100 M bits/s.

The node H floods the above-mentioned configuration file information (Slice Profile) to IGP domain 1 by the interior gateway protocol (IGP), the flooded configuration file information (Slice Profile) contains the following TLVs/Sub-TLVs:
(1) Optional information field: Slice Profile TLV.
(2) Rules for allocated resource: Reservable Bandwidth Sub-TLV.

After receiving the flooded configuration file information (Slice Profile), each node in IGP domain 1 determines whether it is in the MT-ID 100 virtual network, if YES, a dedicated queue for MT-ID 100 is created in the corresponding link resource on its forwarding plane and the bandwidth resource is set to 100 M bits/s.

The border node B1 will continue to leak the configuration file information (Slice Profile) learned from IGP domain 1 to IGP domain 2 by means of IGP, after receiving the flooded configuration file information (Slice Profile), each node in IGP domain 2 determines whether it is in the MT-ID 100 virtual network, if YES, dedicated queue for MT-ID 100 is created in the corresponding link resources on the forwarding plane of the node, and the bandwidth resource is set to 100 M bits/s. In particular, the border node B2 of IGP domain 2 can establish a dedicated queue for MT-ID 100 for the inter-domain link link-B2-B3 and set the bandwidth resource to 100 M bits/s, as long as the inter-domain link is also configured to join MT-ID 100.

It is noted that IGP domain 2 may also use MT-ID different from IGP domain 1 to characterize a network slice, at this time, a local policy can be configured on node B1 to generate a new Slice Profile 2 (including MT-ID of IGP domain 2) and flood it into IGP domain 2, the Slice Profile 1 originally learned from IGP domain 1 is closed and leaked to IGP domain 2, the resource contained in Slice Profile 2 can be copied from Slice Profile 1.

The node B2 will continue to redistribute configuration file information (Slice Profile) learned from IGP domain 2 to the BGP instance, and notify the neighbor node B3 in the BGP domain. At this time, the local policy can be configured on node B2 to add LSM information to the notified configuration file information (Slice Profile), so as to adapt to MT-ID 200 of IGP domain 3, that is, the notified configuration file information (Slice Profile) contains the following NRLI/Sub-TLVs:
(1) Multi-protocol network layer reachability information: MP_REACH_NLRI.
(2) Optional information field: Slice Profile NLRI.
(3) Slice Profile attribute in the above-mentioned embodiment.
(4) Rules for allocated resource: Reservable Bandwidth Sub-TLV.
(5) The Local Slice Mapping Sub-TLV in the above embodiment.

After receiving the above BGP notification, the node B3 imports the BGP notification to IGP and floods the same to IGP domain 3, where the Scheme Type and Slice Identifier information of the configuration file information (Slice Profile) are copied from the LSM.

After receiving the flooded configuration file information (Slice Profile), each node in IGP domain 3 (including node B3) determines whether it is in the MT-ID 200 virtual network, if so, a dedicated queue for MT-ID 200 is created in the corresponding link resource on the forwarding plane of the node, and the bandwidth resource is set to 100 M bits/s.

It can be seen from the embodiments that configuration file information (Slice Profile) needs to be generated on a single node, and the local policy needs to be configured on the border node where the slice identifier changes, so as to complete resource allocation of the end-to-end IGP MT network slice. Compared with a method in some cases of configuring network slice resource for a node in the entire network, the configuration efficiency and the creation efficiency of network slices are improved, and the operation and maintenance overhead is reduced.

Finally, the NRP scheme type is adopted in creating a network slice.

As shown in FIG. 11, a network slice spanning three IGP domains is created, the end-to-end network slice is composed of slice part 1, slice part 2, slice part 3, and slice part 4. Assume that IGP domain 1 and IGP domain 2 belong to the same manager, and IGP domain 3 belongs to another manager. One NRP deployment solution is to use a unified NRP-ID (such as NRP-ID 100) to identify network slices throughout the network, and a unified topology filtering rule is used to customize the topology of the NRP in each IGP domain, and different mapping topologies can also be used in different IGP domains.

For example, the following configuration file information (Slice Profile) is generated on node H.
(1) Scheme type: NRP.
(2) Slice identifier: 100.
(3) Profile priority: 255.
(4) Slice topology: include-any "red | green | blue" (or referencing IGP flex-algo 128).
(5) Allocated resource for a slice: reservable bandwidth 100 M bits/s.

Node H floods (sends) the above-mentioned configuration file information (Slice Profile) to IGP domain 1 by the interior gateway protocol IGP, the flooded configuration file information (Slice Profile) contains the following TLVs/Sub-TLVs:
(1) Optional information field: Slice Profile TLV.
(2) Include-Any Admin Group Sub-TLV (or Reference Topology Sub-TLV).
(3) Rules for allocated resource: Reservable Bandwidth Sub-TLV.

After receiving the flooded Slice Profile information, each node in IGP domain 1 determines whether it can successfully pass the topology filtering rules of the Slice Profile (or is in the referenced topology), if so, it creates a dedicated queue for NRP-ID 100 in the corresponding link resource on its forwarding plane and sets the bandwidth resource to 100 M bits/s.

The border node B1 will continue to leak the configuration file information (Slice Profile) learned from IGP domain 1 to IGP domain 2 by the IGP, after receiving the flooded configuration file information (Slice Profile), each node in IGP domain 2 determines whether it can successfully pass the topology filtering rules of the Slice Profile (or is in the referenced topology), if YES, a dedicated queue for NRP-ID 100 is created in the corresponding link resources on the forwarding plane of the node, and the bandwidth resource is set to 100 M bits/s. In particular, the border node B2 of IGP domain 2 can establish a dedicated queue for NRP-1D 100 for the inter-domain link link-B2-B3 and set the bandwidth resource to 100 M bits/s, as long as the color information of the inter-domain link can successfully pass the topology filtering rules of Slice Profile (or pass the filtering rules of the referenced topology).

It is worth noting that if reference topology is used, the reference topology of NRP in IGP domain 2 may be different from the reference topology in IGP domain 1, in this case, a local policy can be configured on node B1 to update the reference topology information in the configuration file information (Slice Profile) and then flood it into IGP domain 2.

The node B2 will continue to redistribute the configuration file information (Slice Profile) learned from IGP domain 2 to the BGP instance, and notify the neighbor node B3 in the BGP domain. The notified configuration file information (Slice Profile) contains the following NRLI/Sub-TLVs:
(1) Multi-protocol network layer reachability information: MP_REACH_NLRI.
(2) Optional information field: Slice Profile NLRI.
(3) Slice Profile attribute in the above-mentioned embodiment.
(4) Include-Any Admin Group Sub-TLV (or Reference Topology Sub-TLV) in the above embodiments.
(5) Rules for allocated resource: Reservable Bandwidth Sub-TLV.

After receiving the above BGP notification, node B3 imports it into IGP and floods it to IGP domain 3. It is noted that if referenced topology is used, the referenced topology of NRP in IGP domain 3 may be different from the referenced topology in IGP domain 2, in this case, a local policy can be configured on node B3 to update the referenced topology information in the configuration file information (Slice Profile) and then flood it into IGP domain 3.

After receiving the flooded configuration file information (Slice Profile), each node in IGP domain 3 (including node B3) determines whether it can successfully pass the topology filtering rules of the configuration file information (Slice Profile) (or is in the referenced topology), if so, it creates a dedicated queue for NRP-ID 100 in the corresponding link resource on its forwarding plane and sets the bandwidth resource to 100 M bits/s.

It can be seen from this embodiment that configuration file information (Slice Profile) needs to be generated on a single node, and the local policy needs to be configured on the border node where the slice identifier changes, so as to complete resource allocation of the end-to-end NRP network slice. Compared with a method in some cases of configuring network slice resource for a node in the entire network, the configuration efficiency and the creation efficiency of network slices are significantly improved, and the operation and maintenance overhead is reduced.

It should be noted that the network slice creation method provided by embodiments of the present application can be executed by a network slice creation apparatus, in an embodiment of the present application, the network slice creation apparatus provided by an embodiment of the present application is illustrated by taking the execution of the network slice creation method by the network slice creation apparatus as an example.

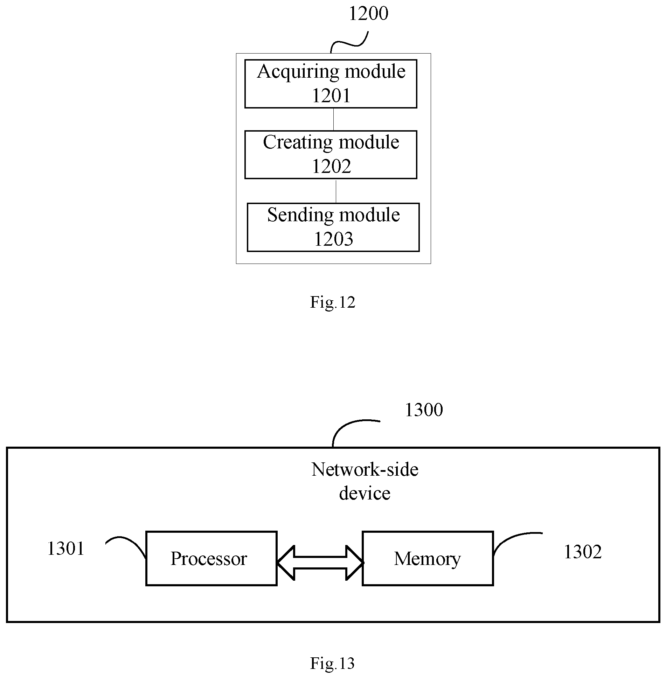

FIG. 12 is a schematic structural diagram of a network slice creation apparatus according to an embodiment of the present application. As shown in FIG. 12, the network slice creation apparatus 1200 includes: an acquiring module 1201 for acquiring configuration file information of a network slice; a creating module 1202 for creating the network slice according to the configuration file information; and a sending module 1203 for sending the configuration file information to at least one second node in a predetermined network, wherein the configuration file information is used to enable the second node to create the network slice according to the configuration file information.

In an embodiment of the present application, the configuration file information of a network slice is acquired; the network slice is created according to the configuration file information; and the configuration file information is sent to at least one second node in the predetermined network, wherein the configuration file information is used to enable the second node to create the network slice according to the configuration file information. Upon the configuration file information is generated, the node in the network can automatically create a network slice according to the configuration file information, and only part of, rather than all of, the nodes in the network need to generate the configuration file information, part of the nodes send the configuration file information to the second node, then the second node configures dedicated resource for the network slice to be created according to the received configuration file information, which can improve the efficiency in creating the network slice and reduce the workload in deploying the network slice..

In one possible implementation, a predetermined network includes a first IGP network determined according to an internal gateway protocol (IGP), and the sending module 1203 is further used to send the configuration file information to at least one second node in the first IGP network.

In one possible implementation, a predetermined network includes a second BGP network determined according to a border gateway protocol (BGP), and the sending module 1203 is further used to send the configuration file information to at least one third node in the second BGP network.

In one possible implementation, a predetermined network includes a first IGP network determined according to an internal gateway protocol (IGP) and a second BGP network determined according to an internal gateway protocol (IGP), and the sending module 1203 is further used to send the configuration file information to the fourth node in the second BGP network by a border node in the first IGP network.

Alternatively, the configuration file information is sent to a fifth node in the first IGP network by a border node in the second BGP network.

In one possible implementation, the network slice is created using different creation modes in the first IGP network and the second BGP network, and the sending module 1203 is further used to carry local slice mapping information when the configuration file information is sent to the fourth node in the second BGP network by the border node in the first IGP network; the local slice mapping information indicates that the creation mode used in the second BGP network and the slice identifier corresponding to the creation mode.

In one possible implementation, the network slice is created using different creation modes in the first IGP network and the second BGP network, and the sending module 1203 is further used to carry local slice mapping information when the configuration file information is sent to the fifth node in the first IGP network by the border node in the second BGP network; the local slice mapping information indicates that the creation mode used in the first IGP network and the slice identifier corresponding to the creation mode.

In one possible implementation, the internal gateway protocol (IGP) or the border gateway protocol (BGP) includes an optional information field, and the optional information field is used to characterize a scheme type, slice topology, allocated resource, and profile priority in the configuration file information.

In one possible implementation, with respect to the scheme type in the configuration file information, the optional information field uses different values to indicate different scheme types, including: a first value, indicating the IGP multi-topology technology scheme type; a second value, indicating the IGP flexible algorithm scheme type; and a third value, indicating the NRP scheme type.

In one possible implementation, with respect to the slice topology in the configuration file information, the optional information field specifies to contain or exclude a link in a specific color, including one of the following: for any link in the physical network, if the color information of the link contains any color contained in the optional information field, the link is cut from the network slice; or for any link in the physical network, if the color information of the link does not contain any color contained in the optional information field, then the link is cut from the network slice; or for any link in the physical network, if the color information of the link does not contain all the colors contained in the optional information field, then the link is cut from the network slice.

In one possible implementation, with respect to the slice topology in the configuration file information, the optional information field specifies to contain or exclude a node at a specific IP address, including one of the following: for any node in the physical network, if the IP address of the node can be covered by the high-order part of any prefix contained in the optional information field, then the node is cut from the network slice; or for any node in the physical network, if the IP address of the node cannot be covered by the high-order part of all prefixes contained in the optional information field, then the node is cut from the network slice.

In one possible implementation, with respect to the slice topology in the configuration file information, the optional information field specifies to contain or exclude a specific domain, including one of the following: for any node in the physical network, if the autonomous system (AS) where any node is located can be covered by any autonomous system included in the optional information field, then the node is cut from the network slice; or for any node in the physical network, if the autonomous system (AS) where any node is located cannot be covered by all the autonomous systems included in the optional information field, then the node is cut from the network slice.

In one possible implementation, with respect to the allocated resource in the configuration file, the optional information field uses different identifiers to indicate resource information in the allocated resource.

In one possible implementation, with respect to reference topology in the configuration file information, the optional information field uses different values to indicate different types of reference topology, including: a first value, indicating the IGP multi-topology technology scheme type; a second value, indicating the IGP flexible algorithm scheme type; and a third value, indicating the NRP scheme type.

In one possible implementation, the configuration file information includes at least one of the following: the scheme type used to indicate a creation mode for creating a network slice; a slice identifier corresponding to the scheme type; a slice topology used to define inclusion or exclusion of a link of in a specific color for the network slice, and/or used to define inclusion or exclusion of a node of at a specific IP address for the network slice, and/or used to define inclusion or exclusion of a specific domain for the network slice, and/or a reference topology; or the profile priority used to validate the configuration file information of the first node with a high priority when a plurality of first nodes in the physical network notify configuration file information related to the network slice.

In one possible implementation, the allocated resource includes at least one of the following: bandwidth; buffer; or time slot.

In one possible implementation, the apparatus further includes: a generating module for generating configuration file information.

In one possible implementation, the generation method of the configuration file information includes one of the following: static configuration according to network slicing planning of a first target object; dynamic generation according to a slice path acquired by dynamic calculation; and dynamic generation according to a slice path received from a second target object.

The network slice creation apparatus in embodiments of the present application can be an electronic device, such as an electronic device with an operating system, or a component in an electronic device, such as an integrated circuit or a chip. The electronic device can be a terminal, or it can be other devices other than a terminal. Exemplarily, the terminal can include but is not limited to the types of terminals 11 listed above, and other devices can be servers, network attached storage (NAS), etc., which are not specifically limited in embodiments of the present application.

The network slice creation apparatus provided by the embodiments of the present application can implement the various processes implemented by the method embodiments of FIG. 1, and can achieve the same technical effect, which will not be repeated here to avoid repetition.

Optionally, as shown in FIG. 13, an embodiment of the present application further provides a network-side device 1300, including a processor 1301 and a memory 1302, the memory 1302 stores a program or instruction executable on the processor 1301, and the program or instruction, when executed by the processor 1301, implements various steps of the above embodiments of the network slice creation method, and can achieve the same technical effect.

An embodiment of the present application further provides a readable storage medium storing a program or instruction thereon, and the program or instruction, when executed by the processor, implements various processes of the above embodiments of the network slice creation method, and can achieve the same technical effect, to avoid repetition, it will not be repeated here.

The processor is the processor in the network-side device in the above embodiment. The readable storage medium includes computer storage medium, such as read-only memory (ROM), random access memory (RAM), magnetic disk or optical disk.

An embodiment of the present application further provides a chip, including a processor and a communication interface, wherein the communication interface is coupled to the processor, and the processor is used to run programs or instructions, so as to implement the various processes of the above network slice creation method embodiments, and can achieve the same technical effect, to avoid repetition, it will not be repeated here.

It should be understood that the chip mentioned in the embodiments of the present application can also be called a system-level chip, a system chip, a chip system or a system-on-chip, etc.

An embodiment of the present application further provides a computer program/program product, the computer program/program product is stored in a storage medium and is executed by at least one processor to implement the various processes of the above network slice creation method embodiments, and can achieve the same technical effect, to avoid repetition, it will not be repeated here.

It should be noted that, as used herein, the terms "include", "comprise" or any other variations thereof are intended to cover a non-exclusive inclusion, such that a process, method, article, or apparatus that comprises a series of elements not only comprises those elements, but also comprises other elements that are not explicitly listed, or further comprises elements that are inherent to the process, method, article, or apparatus. Without further limitations, an element limited by "comprising a..." does not exclude the presence of other identical elements in the process, method, article, or device that comprises the element. In addition, it should be noted that the scope of the method and device in embodiments of this application is not limited to perform functions in the order shown or discussed, but may also include performing functions in a substantially simultaneous manner or in an opposite order according to the functions involved, for example, the described methods may be performed in a different order than described, and various steps may be added, omitted, or combined. Additionally, features described with reference to certain examples can be combined in other examples.

With the description of the above implementations, those skilled in the art can clearly understand that the above implementation methods can be effected via software and necessary general hardware platforms, as well as hardware, in many cases, the former is the preferred implementation. Based on such understanding, the technical solution of the this application essentially or the part contributing to the prior art may be embodied in the form of a computer software product, the computer software product is stored in a storage medium (such as a ROM/RAM, a magnetic disk, and an optical disk), and includes a number of instructions for instructing a terminal (which may be a mobile phone, a computer, a server, an air conditioner, or a network device) to execute the methods described in various embodiments of this application.

The embodiments of the application are described above in conjunction with the accompanying drawings, but the application is not limited to the above-mentioned particular embodiments that are merely illustrative rather than limiting, a wide variety of forms can be made by a person skilled in the art under teachings of the application without departing from the spirit and scope of the application, and such forms all fall within the scope of the claims.

## Claims

1. A network slice creation method, comprising:
acquiring configuration file information of a network slice;
creating, according to the configuration file information, the network slice; and
sending the configuration file information to at least one second node in a predetermined network, wherein the configuration file information is used to enable the second node to create the network slice according to the configuration file information.

2. The network slice creation method of claim 1, wherein the predetermined network comprises a first internal gateway protocol called IGP network determined according to IGP, and sending the configuration file information to at least one second node in the predetermined network comprises:
sending the configuration file information to at least one second node in the first IGP network.

3. The network slice creation method of claim 1, wherein the predetermined network comprises a second border gateway protocol called BGP network determined according to BGP, and sending the configuration file information to at least one second node in the predetermined network comprises:
sending the configuration file information to at least one third node in the second BGP network.

4. The network slice creation method of claim 1, wherein the predetermined network comprises a first internal gateway protocol called IGP network determined according to IGP and a second border gateway protocol called BGP network determined according to BGP, and sending the configuration file information to at least one second node in the predetermined network comprises at least one of the following:
sending, by a border node in the first IGP network, the configuration file information to a fourth node in the second BGP network; or
sending, by a border node in the second BGP network, the configuration file information to a fifth node in the first IGP network.

5. The network slice creation method of claim 4, wherein the network slice is created using different creation modes in the first IGP network and the second BGP network, and sending, by the border node in the first IGP network, the configuration file information to the fourth node in the second BGP network comprises:
carrying local slice mapping information when sending, by the border node in the first IGP network, the configuration file information to the fourth node in the second BGP network;
wherein the local slice mapping information indicates a creation mode used in the second BGP network and a slice identifier corresponding to the creation mode.

6. The network slice creation method of claim 4, wherein the network slice is created using different creation modes in the first IGP network and the second BGP network, and sending, by the border node in the second BGP network, the configuration file information to the fifth node in the first IGP network comprises:
carrying local slice mapping information when sending, by the border node in the second BGP network, the configuration file information to the fifth node in the first IGP network;
wherein the local slice mapping information indicates a creation mode used in the first IGP network and a slice identifier corresponding to the creation mode.

7. The network slice creation method of claim 4, wherein the internal gateway protocol called IGP or the border gateway protocol called BGP comprises an optional information field, and the optional information field is used to represent a scheme type, a slice topology, an allocated resource, and a profile priority in the configuration file information.

8. The network slice creation method of claim 7, wherein with respect to the scheme type in the configuration file information, the optional information field uses different values to indicate different scheme types, comprising:
a first value, indicating an IGP multi-topology technology scheme type;
a second value, indicating an IGP flexible algorithm scheme type; and
a third value, indicating a network resource partitioning called NRP scheme type.

9. The network slice creation method of claim 7, wherein with respect to the slice topology in the configuration file information, the optional information field specifies to contain or exclude a link in a specific color, comprising one of the following:
for any one link in a physical network, cutting, upon the condition that color information of the link comprises any color comprised in the optional information field, the link from the network slice;
for any one link in a physical network, cutting, upon the condition that color information of the link does not comprise any color comprised in the optional information field, the link from the network slice; or
for any one link in a physical network, cutting, upon the condition that color information of the link does not comprise all colors comprised in the optional information field, the link from the network slice.

10. The network slice creation method of claim 7, wherein with respect to the slice topology in the configuration file information, the optional information field specifies to contain or exclude a node at a specific IP address, comprising one of the following:
for any one node in a physical network, cutting, upon the condition that an IP address of the node is able to be covered by information of a high-order part of any one prefix comprised in the optional information field, the node from the network slice; or
for any one node in a physical network, cutting, upon the condition that an IP address of the node is not able to be covered by information of high-order parts of all prefixes comprised in the optional information field, the node from the network slice.

11. The network slice creation method of claim 7, wherein with respect to the slice topology in the configuration file information, the optional information field specifies to contain or exclude a specific domain, comprising one of the following:
for any one node in a physical network, cutting, upon the condition that an autonomous system called AS in which the node is located is able to be covered by any autonomous system comprised in the optional information field, the node from the network slice; or
for any one node in a physical network, cutting, upon the condition that an autonomous system called AS in which the node can located is not able to be covered by all autonomous systems comprised in the optional information field, the node from the network slice.

12. The network slice creation method of claim 7, wherein with respect to the allocated resource in the configuration file, the optional information field uses different identifiers to indicate resource information in the allocated resource.

13. The network slice creation method of claim 7, wherein with respect to reference topology in the configuration file information, the optional information field uses different values to indicate different types of reference topology, comprising:
a first value, indicating an IGP multi-topology technology scheme type;
a second value, indicating an IGP flexible algorithm scheme type; and
a third value, indicating a NRP scheme type.

14. The network slice creation method of claim 1, wherein the configuration file information comprises at least one of the following:
a scheme type, used to indicate a creation mode for creating the network slice;
a slice identifier corresponding to the scheme type;
a slice topology, used to define inclusion or exclusion of a link in a specific color for the network slice, and/or used to define inclusion or exclusion of a node at a specific IP address for the network slice, and/or used to define inclusion or exclusion of a specific domain for the network slice, and/or a reference topology;
allocated resource, used to reserve resource for the network slice; or
profile priority, used to validate configuration file information of a first node with a high priority upon the condition that a plurality of first nodes in the physical network externally notify configuration file information related to the network slice.

15. The network slice creation method of claim 14, wherein the allocated resource comprises at least one of the following:
a bandwidth;
a buffer zone; or
a time slot.

16. The network slice creation method of claim 1, wherein prior to acquiring the configuration file information of the network slice, the method further comprises:
generating the configuration file information.

17. The network slice creation method of claim 16, wherein the configuration file information is generated in one of the following manners:
the configuration file information is statically configured according to network slice planning of a first target object;
the configuration file information is dynamically generated according to a slice path obtained by dynamic calculation; or
the configuration file information is dynamically generated according to a slice path received from a second target object.

18. A network-side device, comprising a processor and a memory, wherein the memory stores a program or instruction that is executable on the processor, and the program or instruction, when executed by the processor, implements the steps of the network slice creation method according to any one of claims 1-17.

19. A readable storage medium, wherein the readable storage medium stores a program or instruction thereon, and the program or instruction, when executed by the processor, implements the steps of the network slice creation method according to any one of claims **1-**17.
